# EUROPEAN PATENT SPECIFICATION

(11) **EP 1 625 724 B1**
(45) Date of publication and mention of the grant of the patent: **07.12.2016**
(21) Application number: 04752383.2
(22) Date of filing: 13.05.2004
(51) Int. Cl.: H04L 29/08, H04L 29/06, G06F 9/46, G06F 9/50

(54) **SYSTEM AND METHOD FOR SELECTING A SERVICE PROVIDER**
VERFAHREN UND VORRICHTUNG ZUR DIENSTANBIETERAUSWAHL
SYSTÈME ET PROCÉDÉ PERMETTANT DE SELECTIONNER UN FOURNISSEUR DE SERVICE

(30) Priority: 19.05.2003 US 471851 P; 30.10.2003 US 698671
(43) Date of publication of application: 15.02.2006
(73) Proprietor: HEWLETT-PACKARD DEVELOPMENT COMPANY, L.P., Houston, TX 77070 (US)
(72) Inventor: ROY, Sumit, c/o Hewlett-Packard Company, Palo Alto, CA 94304 (US); COVELL, Michele, Palo Alto, CA 94306 (US); ANKCORN, John, Palo Alto, CA 94306 (US); APOSTOLOPOULOS, J. G., c/o Hewlett-Packard Company, Palo Alto, CA 94304 (US); HARVILLE, Michael, Palo Alto, CA 94306 (US); SHEN, Bo, Fremont, CA 94539 (US); TAN, Wai-tian, Sunnyvale, CA 94087 (US); WEE, Susie, J., c/o Hewlett-Packard Company, Palo Alto, CA 94304 (US)
(74) Representative: Zimmermann, Tankred Klaus
(86) International application number: PCT/US2004/015356
(87) International publication number: WO 2004/105352

(56) References cited:
- US-A1- 2001 039 581
- US-A1- 2002 032 777
- US-B1- 6 516 350
- MA W-Y ET AL: "Content Services Network: The architecture and Protocols", INTERNET CITATION, 20 June 2001 (2001-06-20), XP002256667, Retrieved from the Internet: URL:www.cs.bu.edu [retrieved on 2003-09-30]

## Description

### TECHNICAL FIELD

Embodiments of the present invention pertain to servicing and delivery of content over a network.

### BACKGROUND ART

Typically, people learn of content sites (e.g., a video-based movie web page) based on their web browsing experiences using their desktop or laptop machines, since these devices are well suited to the input (e.g., Uniform Resource Locators or search queries) and output (e.g., reliable, high-bandwidth connections) requirements associated with web browsing. Once such sites are located, web users may subsequently try to connect to them using mobile devices such as video-enabled personal digital assistants (PDAs) or cell phones.

To accommodate the diversity in user (client) devices, content providers have to be able to support a wide range of different bit rates (according to the bandwidth of the connection), video frame rates (according to the processing power available at the client device, which itself varies dynamically according to power management strategies employed by the client device), video frame sizes (according to the display size available at the client device), or the like.

One way to address these problems is to endow the network with the ability to transcode media data as it is streamed, so that it arrives at a client device in a format that is tailored to the client device. In other words, processing is performed by the network on an input media content stream, so that an output content stream is produced with a different bit rate, video frame rate, video frame size, or other parameters, that makes the output content stream more amenable to consumption on the client device. This transcoding operation may be thought of as a service provided by the network. More generally, one might imagine that other types of media processing and analysis might also be performed within the network, so that modified content, or data derived from content available through the network, can be delivered to client devices. The ability to provide this sort of functionality in a network would enable the construction of a wide variety of useful services based on media content input, and these services could be provided for consumption by end users with access to the network.

US 2001/039581 A1 discloses a system for distributing incoming client requests across multiple servers in a networked client-server computer environment which processes all requests as a set that occur within a given time interval and collects information on both the attributes of the requests and the resource capability of the servers to dynamically allocate the requests in a set to the appropriate servers upon the completion of the time interval. The system includes a request table to collect at least two requests incoming within a predetermined time interval. A request examiner routine analyzes each collected request with respect to at least one attribute. A system status monitor collects resource capability information of each server in a resource table. An optimization and allocation process distributes collected requests in the request table across the multiple servers upon completion of said time interval based on an optimization of potential pairings of the requests in the request table with the servers in the resource table.

US 2002/032777 A1 discloses a load balancing based on the real-time load status of servers. A load balancer providing load balancing in multiple servers for service requests from a client includes: means for estimating load resulting from the service requests based on header information in the service request packets; and means for managing estimation values for each server to which requests are to be sent.

US 6,516,350 B1 discloses a distributed system for the management of distributed resources interconnected by a computer network and comprised of a plurality of limited supply resources. The system comprises a plurality of server resources, preferably with target multimedia content, real time processing engines, etc., and a plurality of intermediary system resources. The system assigns clients across local and global resources and coordinates the placement of replicas of target content across global resources.

MA, W-Y ET AL: "Content Services Network: The Architecture and Protocols" INTERNET CITATION, 20 June 2001 (2001-06-20), URL:www.cs.bu.edu describes content delivery networks (CDNs) as application-specific overlay networks that make web caching an infrastructure service accessible to any content provider. A content services network (CSN) is described that makes content transformation and processing an infrastructure service accessible to its subscribers. The CSN is considered another layer of network infrastructure built around CDNs that interacts collaboratively with user-agents, content servers, and other network intermediaries including ISPs' caching proxies and CDNs' surrogates in the content delivery process to provide value-added services.

### DISCLOSURE OF THE INVENTION

It is an object of the invention to provide a method and a system that can deliver content, as well as content that results from the processing or analysis of other content, to a large number of clients without network congestion and the resulting degradation in the quality of the delivered content.

This object is achieved by a method of claim 1, a computer-usable medium of claim 10 a system of claim 11.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram showing information flow in and out of a system for servicing and delivering content to a client device according to one embodiment of the present invention.
Figure 2A is a block diagram showing information flow in and out of a system for servicing and delivering content to a client device according to another embodiment of the present invention.
Figure 2B is a block diagram showing information flow in and out of a system for servicing and delivering content to a client device according to yet another embodiment of the present invention.
Figure 3 illustrates a method for servicing and delivering content according to one embodiment of the present invention.
Figure 4 illustrates a method for managing the servicing of content according to one embodiment of the present invention.

The drawings referred to in this description should not be understood as being drawn to scale except if specifically noted.

### BEST MODE FOR CARRYING OUT THE INVENTION

Reference will now be made in detail to various embodiments of the invention, examples of which are illustrated in the accompanying drawings. While the invention will be described in conjunction with these embodiments, it will be understood that they are not intended to limit the invention to these embodiments. On the contrary, the invention is intended to cover alternatives, modifications and equivalents, which may be included within the scope of the invention as defined by the appended claims. Furthermore, in the following description of the present invention, numerous specific details are set forth in order to provide a thorough understanding of the present invention. In other instances, well-known methods, procedures, components, and circuits have not been described in detail as not to unnecessarily obscure aspects of the present invention.

Aspects of the present invention may be practiced on an intelligent device such as a computer system that includes, in general, a processor for processing information and instructions, random access (volatile) memory (RAM) for storing information and instructions, read-only (non-volatile) memory (ROM) for storing static information and instructions, a data storage device such as a magnetic or optical disk and disk drive for storing information and instructions, an optional user output device such as a display device (e.g., a monitor) for displaying information to the computer user, an optional user input device including alphanumeric and function keys (e.g., a keyboard) for communicating information and command selections to the processor, and an optional user input device such as a cursor control device (e.g., a mouse) for communicating user input information and command selections to the processor.

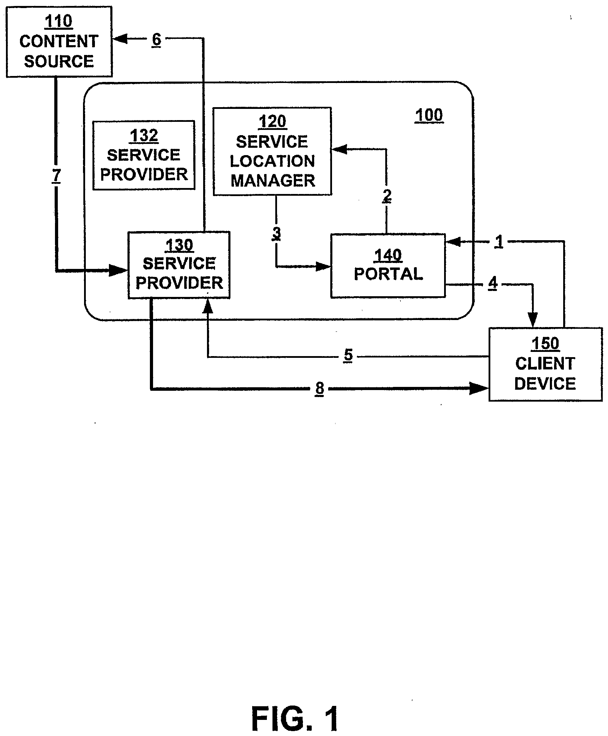

Figure 1 is a block diagram of a system 100 for servicing content from a content source 110 and for delivering the service result content to a client device 150 according to one embodiment of the present invention. In overview, a client device 150 seeking a service contacts system 100 (e.g., portal 140). The client device 150 is redirected to a provider of the service (e.g., service provider 130). Content from a content source (e.g., content source 110) is sent (e.g., streamed) to the client device via the service provider. Thus, in one embodiment, system 100 is for streaming media from a content source to a client device.

For purposes of the present application, streaming media as used herein means data that is communicated between network nodes in a continual manner. Examples include streaming audio and video, which may have strict time constraints on delivery. In these examples, if portions of these streams are delivered too late, the portions will be ignored due to tardiness (they are too late to effect what is being played by the client application and are therefore largely useless). Alternately, if portions of these streams are delivered too early, they will be lost due to buffer constraints within the service or client application. Other examples of data that is transmitted in a continual manner include streams of measurements or streams of experimental results. These types of streams include weather readings from remote sensors and temperature readings from cooling systems. In these examples, there are no strict time constraints on the delivery; however, the data transmission has a temporal component that is best served by seamlessly ongoing transmissions.

As such, by using streaming media, the effect of service placement has a long-lived effect on resources of both the network and the server nodes. For example, in transcoding a movie for viewing under streaming conditions, the data will span as much as two hours and therefore the transcoding session may span as much as two hours of the server time. For other types of streaming (e.g., instrument readings), the duration of the stream and of the service being done on the stream can be never-ending. The computational resources of the server node are effected for long periods of time with uncertain durations. Similarly, the network resources at the server node, on all the links between the server and the content provider, and between the server and the client machine, will be effected for long periods of time with uncertain durations. This is in marked contrast to more classic network transactions in which the data transfer is done in a block, often in less terms of seconds or minutes and in which the service performed on that data has a constrained duration.

In an embodiment that deals with streaming media, the following are some of the issues that need to be considered; that is, in comparison to web-based distribution, and web-based business transactions and/or downloads, streaming media has the following characteristics that need to be addressed:
a large amount of data - the end point of the data may not be known, and caching a number of items of content can consume significant memory resources;
time-ordered data - the temporal order in which data is received can be important;
access may not be carried through to completion - for example, only some portion of an item of content may be accessed (e.g., the first couple of minutes of a full-length movie);
bandwidth needed cannot be determined without some degree of understanding of the subject media - for example, one video file may be at a high spatial resolution, and another video file may not, and so while the files, both being video files, may appear to be the same, their respective bandwidth may be quite different;
jitter in latency or bandwidth can be problematic - a consistent latency may be acceptable, but latency that varies considerably during a session can be problematic because of buffer overflow or underflow;
inadequate computation or bandwidth resources can make results useless due to time constraints;
data is typically encoded (compressed), and so loss or lateness of some part of the data can have consequences on subsequent data decoding (decompression);
lost data is not typically retransmitted due to time constraints; and
a record of state should be maintained for all client devices - for streaming media, the streaming node needs to continue streaming data, and cannot wait to receive state information from clients.

The result of these differences is to greatly increase the need for management and monitoring of services performed on streaming media.

In the present embodiment, system 100 includes a service location manager 120, a plurality of service providers exemplified by a service provider 130 and service provider 132, and a portal 140. The service location manager 120, the service providers 130 and 132, and the portal 140 are logical entities that can be implemented on a single device or using multiple devices. Thus, system 100 can be representative of, for example, a single computer system that implements the functionality of service location manager 120, service providers 130 and 132, and portal 140. Alternatively, system 100 can encompass different nodes or devices in a computer system network. These nodes may be server computer systems, switches, routers or the like, having processing and memory capabilities sufficient to perform the various functionalities to be described herein. Generally speaking, the functionality provided by system 100 can be implemented using one or more devices. Furthermore, although system 100 is described for a single service location manager 120 and portal 140, there can be more than one of any of those elements. In addition, there can be more than two service providers.

System 100 can be implemented in an existing computer system network by overlaying the functionality of service location manager 120, service providers 130 and 132, and/or portal 140 onto the existing network. That is to say, all or a part of the functionality provided by system 100 can be incorporated into existing network nodes. Alternatively, all or part of system 100 can be implemented by adding nodes into an existing network. For example, existing content sources and portals may be used, with nodes added for servicing content and for managing service providers.

In the present embodiment, system 100 can communicate with a content source 110 and a client device 150. Although described for a single content source 110 and client device 150, there can be more than one of each of those elements. Communication between system 100, content source 110 and client device 150, as well as communication within system 100, can be wireless.

Portal 140 is a well-published portal site that serves as the first point of contact between client device 150 and system 100. Content source 110 is the source of the item of content.

Client device 150 can be virtually any kind of user device such as, but not limited to, a desktop or laptop computer system, or a video-enabled handheld computer system (e.g., a portable digital assistant) or cell phone. In general, client device 150 is used to request and subsequently receive an item of content.

An item of content refers to media or non-media data that can be live or recorded. An item of content can include, but is not limited to, video-based data, audio-based data, image-based data, web page-based data, graphic data, text-based data or some combination thereof. For example, an item of content can be a movie of digital video disk (DVD) quality.

A type of service may need to be performed on the item of content before the content is provided to client device 150. Types of services can include the processing of an item of content and/or the analysis of an item of content. For example, types of services can include video processing such as, but not limited to, transcoding, jitter removal, dynamic clipping based on facial recognition, video analysis, resizing of the video, optical character reading from video, background removal, and the like. Additionally, types of services can include audio processing such as, but not limited to, background removal, audio enhancement, audio speed up or slow down, audio enhancement, noise reduction, speech recognition, audio analysis, and the like. The analysis of an item of content can include, for example, speech recognition that produces a text transcript, or optical character recognition applied to one or more video images of a video stream to produce a text output. A video-based person tracking service that outputs a stream of records of person location and times is another example that can be used to illustrate analysis of an item of content. The locations might be expressed in terms of image coordinates, but may be more useful when expressed in terms of physical world coordinates (e.g., "x,y" coordinates referenced to the floor of a room). Another example that can be used to illustrate an analysis of an item of content pertains to a face detector service that outputs snapshots of faces extracted from a video stream, the times and image locations at which the snapshots were detected, identities for the faces, and/or the classification of the faces. Some portion of this information can be represented as text data.

As used herein, an item of content may have been serviced, may be in the process of being serviced, may not be serviced, or may not yet be serviced. In other words, an item of content, whether serviced or not, can still be referred to as an item of content. Servicing of an item of content can include the analysis or processing of an item of content. When necessary for clarity of discussion, the result of servicing an item of content is referred to herein using terms such as "service result" or "service result content" or "service result data." Service result content may consist of: a modified version of the original serviced item of content (e.g., when background removal is applied to a video stream); an item of content that is derived from the original item of content (e.g., when optical character recognition is used to produce text output); an item of content that is passed through a service provider and is not modified but merely forwarded (e.g., content that does not require transcoding when received by a transcoding service provider); or an item of content that has been previously sent to a service provider and is now cached/stored on the service provider (e.g., content that was previously serviced and is now stored in memory at the service provider). Additionally, service result content may consist of any combination of the above examples.

Continuing with reference to Figure 1, services such as those described above are performed by service providers 130 and 132. Service providers 130 and 132 each function to provide one or more types of service. That is, service providers 130 and 132 can each provide multiple and different types of services. For example, service provider 130 can be used for transcoding one item of content and for background removal of another item of content. Different types of services can be performed in parallel on different items of content. That is, service providers 130 and 132 can perform a service on different but concurrent content streams. Service providers 130 and 132 can also provide caching services. For example, service provider 130 or 132 can cache an item of content, in whole or in part, before the item of content is serviced by service provider 130 or 132. Similarly, service provider 130 or 132 can cache the service result, in whole or in part, before the service result content is forwarded to the client device 150.

Service location manager 120 functions to select a service provider (e.g., service provider 130 or 132) that can perform the type of service that may need to be performed on an item of content before the service result is provided to the client device 150. Service providers 130 and 132, and any other available service providers, are known to service location manager 120. In one embodiment, service location manager 120 maintains a record or listing of the service providers known to service location manager 120. The type or types of services that each service provider can perform, or can be made to perform, are also known to and recorded by service location manager 120.

In one embodiment, the resources associated with the service providers 130 and 132 are also known to and recorded by service location manager 120. The resources associated with service providers 130 and 132 can include computational or hardware resources, such as but not limited to the processor speed and total memory capacity associated with each of the service providers. The resources associated with service providers 130 and 132 can also include network resources, such as but not limited to the total bandwidth available at each of the service providers for receiving content and for sending content. In general, in one embodiment, service location manager 120 has knowledge of the total capacities of service providers 130 and 132.

In another embodiment, the resources available at each of the service providers 130 and 132 are known to and recorded by service location manager 120. That is, resources available may be less than total capacity.

In yet another embodiment, when service location manager 120 receives a request for an item of content that entails performing a service on the item of content, the service location manager 120 makes a prediction or estimate of the resources needed to perform that service. When a service provider is selected, the record can be revised to reflect that the resources associated with the selected service provider are at least partially allocated to performing the service at hand. For example, if the service is expected to require N megabytes of memory in service provider 130, then the record is updated to indicate that, for service provider 130, N megabytes of memory have been allocated. Alternatively, the amount of memory recorded by service location manager 120 for service provider 130 can be reduced by N megabytes. As will be seen, the record of resources associated with a service provider can be similarly adjusted (e.g., increased) when, for example, a service is completed by a service provider.

As mentioned previously, there can be multiple client devices, each participating in a session (e.g., each requesting an item of content) that may require a service. For each session handled by service location manager 120 in which an item of content is to be serviced, service location manager 120 will select a service provider to perform the service. The various embodiments of the methodology described above are applied to each session in progress, so that service location manager 120 has an updated record of the resources allocated and/or the resources available for each service provider known to service location manager 120.

In essence, according to one embodiment, service location manager 120 has a budget of resources available to perform services. More specifically, service location manager 120 has a budget of the resources available at each service provider. For each session requesting that a service be performed, an estimate of the resources needed for that service can be made. For each session dispatched to a service provider, the budget of available resources for that service provider can be reduced by the estimate. As sessions are terminated, or as services are completed, the budget of available resources can be increased to reflect that resources have become available again. The budget is thereby relatively current, and can be used as the basis for selecting a service provider for each new session.

Note that, in alternative embodiments, a service provider can be selected to perform a service based on the resources available for each service provider or based on the resources already allocated, without regard to the estimate of resources needed to perform that service, or a service provider can be selected to perform a service based on the estimate of resources needed to perform that service, without regard to the resources available or previously allocated for each service provider.

System 100 in operation is now more fully described. At the beginning of a session, client device 150 sends message 1 to portal 140. Message 1 identifies a particular item of content (e.g., the name of a movie).

Also, in one embodiment, message 1 includes information sufficient for identifying a type of service that should be performed on the item of content before the service result is delivered to client device 150. That information can take many forms. In one form, message 1 specifically identifies a type of service (e.g., background removal or speech recognition). In another form, message 1 identifies attributes of client device 150, such as its memory capacity, screen size, processing capability and the like. Based on these attributes, system 100 (e.g., portal 140) can derive a type of service that should be performed (e.g., transcoding). In yet another form, message 1 identifies the type of client device 150, and based on stored knowledge of that type of device, system 100 (e.g., portal 140) can derive a type of service that should be performed (e.g., transcoding).

Message 1 can include other information. If the source of the item of content is known by client device 150, then the content source can also be identified in message 1. For example, message 1 can include the Uniform Resource Locator (URL) for content source 110. If the source of the item of content is not known to client device 150, the content source can be located by system 100 (e.g., by portal 140) if that information is not already known to system 100.

After receiving message 1, portal 140 sends message 2 to service location manager 120. In one embodiment, message 2 includes information sufficient for identifying a type of service that should be performed on the item of content before the service result is delivered to client device 150. As just described, that information can take many forms. In one form, message 2 specifically identifies a type of service (e.g., background removal or speech recognition). In another form, message 2 identifies attributes of client device 150, such as its memory capacity, screen size, processing capability and the like. Based on these attributes, system 100 (e.g., service location manager 120) can derive a type of service that should be performed (e.g., transcoding). In yet another form, message 2 identifies the type of client device 150, and based on stored knowledge of that type of device, system 100 (e.g., service location manager 120) can derive a type of service that should be performed (e.g., transcoding). Based on the information provided by message 2, service location manager 120 identifies the type of service to be performed.

Message 2 can include other information. For example, message 2 can also identify the item of content and/or the content source.

In one embodiment, service location manager 120 maintains a record that includes a list of the service providers 130 and 132 and the services they are capable of providing. In one such embodiment, the record maintained by service location manager 120 also includes the total resource capacities associated with the service providers 130 and 132. The record maintained by service location manager 120 can also include the resources that are available at each of the service providers 130 and 132. The record maintained by service location manager 120 can also include the resources for each of the service providers 130 and 132 that have been previously allocated to other sessions.

Service location manager 120 selects either service provider 130 or 132 to perform the service identified from message 2. In one embodiment, service location manager 120 selects a service provider based on the information provided in the record described above. For example, service location manager 120 can select a service provider based on which service provider has the least amount of resources being utilized or the greatest amount of resources available.

In another embodiment, service location manager 120 estimates the amount of resources associated with performing the service identified in message 2, and uses the estimate to select either service provider 130 or 132 to perform the service. Alternatively, service location manager 120 can select a service provider to perform a service based on both the amount of resources available to the various service providers (or the amount of resources previously allocated) and the amount of resources estimated to be consumed by performing the service.

In the example of Figure 1, service location manager 120 selects service provider 130. The aforementioned service provider record is updated by service location manager 120 to reflect the selection of service provider 130. In one embodiment, the amounts of the various resources associated with service provider 130 are reduced by the estimated amount of resources expected to be used to perform the service (or the amount of resources allocated is increased).

Also, service location manager 120 sends message 3 to portal 140. Message 3 includes information sufficient for locating and contacting service provider 130. For example, message 3 can include the URL for service provider 130.

Message 3 can include other information. For example, message 3 can also identify the item of content and/or the content source.

After receiving message 3, portal 140 sends message 4 to client device 150. Message 4 includes the information for locating and contacting service provider 130 that was provided by message 3. Message 4 can be identical to message 3 (message 4 may simply be a forwarding of message 3). However, message 4 can include other (additional) information added by portal 140. For example, message 4 can also identify the item of content and/or the content source if that information is determined by portal 140 instead of service location manager 120.

In an alternate embodiment, in lieu of messages 3 and 4, service location manager 120 sends a message directly to client device 150. The message from service location manager 120 to client device 150 includes the information for locating and contacting service provider 130. The message can include other information such as the identity of the item of content and/or the content source.

In any case, client device 150 receives a message that includes information sufficient for locating and contacting service provider 130. Based on that information, communication is established between client device 150 and the service provider 130. In other words, the session initiated by client device 150 is automatically transferred from portal 140 to service provider 130. Importantly, the transfer from portal 140 to service provider 130 is seamless and transparent to an end user at client device 150.

In one embodiment, the message received by client device 150 (e.g., message 4) uses or is based on Synchronized Multimedia Integration Language (SMIL). Redirection of client device 150 from portal 140 to service provider 130 can be accomplished using dynamic SMIL rewriting.

Continuing with the example in view of Figure 1, after receiving message 4 from portal 140 (or an equivalent message from service location manager 120), client device 150 sends message 5 to service provider 130. Message 5 identifies the item of content and the type of service to be performed by service provider 130. Message 5 can include other information. For example, if the content source is known at this point to client device 150, that information can be included in message 5.

Upon receiving message 5, service provider 130 sends message 6 to content source 110. As mentioned above, content source 110 can be identified to service provider 130 in message 5. Otherwise, service provider 130 can locate content source 110. In message 6, service provider 130 requests that the item of content be provided.

In response to message 6, content source 110 sends the item of content to service provider 130 for servicing (illustrated by arrow 7 in Figure 1). In one embodiment, the item of content is streamed to service provider 130.

In one embodiment, service provider 130 is always set up and ready to execute the specified service. That is, the specified service can be continuously executing on service provider 130, waiting for data to operate on. In another embodiment, the specified service is quiescent until either message 5 or the item of content is received by service provider 130. That is, service provider 130 may need to set up or start up the specified service, and will not do so until the potential need for the service is identified or until there is an actual need to perform the service.

In any case, service provider 130 can then perform the specified service on the item of content. The item of content can be cached by service provider 130 in whole or in part before servicing, or the item of content can be serviced as it is received by service provider 130.

The service result content is then sent by service provider 130 to client device 150 (illustrated by arrow 8 in Figure 1). In one embodiment, the service result content is streamed to client device 150. The service result content can be cached by service provider 130 in whole or in part after servicing (before streaming), or the service result content can be streamed as it is serviced by service provider 130.

Once the service result content has been delivered by the selected service provider (e.g., service provider 130) and received by client device 150, the ongoing session can be terminated. Accordingly, the service provider history or record maintained by service location manager 120 can be updated to reflect that the service provider 130 has completed its servicing tasks or that the session has been terminated. The record can also be updated to show that resources allocated to performing the service are available again. For example, the amount of available resources recorded for service provider 130 can be increased.

Different approaches can be used to prompt an update of the record. In one approach, at or around the time that the service location manager 120 is making a selection of a service provider, the service location manager 120 estimates the amount of time needed to complete the service to be performed on the item of content. The record can be updated to reflect that the service has been completed when that amount of time has passed. Alternatively, the selected service provider (e.g., service provider 130) can indicate to service location manager 120 when it has completed a service, and the record can be updated accordingly. These approaches can be extended to account for the delivery of the service result content to client device 150. For example, the amount of time estimated by the service location manager 120 for service provider 130 to perform the service can be increased to account for any additional time needed by service provider 130 to send the service result content to client device 150. Similarly, service location manager 120 can estimate the length of time that the session is expected to last (e.g., if the item of content is a movie that lasts two hours, the session may be estimated as lasting about two hours). Alternatively, service provider 130 can indicate to service location manager 120 when it has completed sending the service result content to client device 150.

In the discussion above, the item of content is sent to service provider 130 in response to message 6. As mentioned previously herein, service provider 130 can instead store or cache content previously received and/or serviced, obviating the use of message 6 and the response to message 6 (e.g., obviating the data flow indicated by arrow 7 in Figure 1).

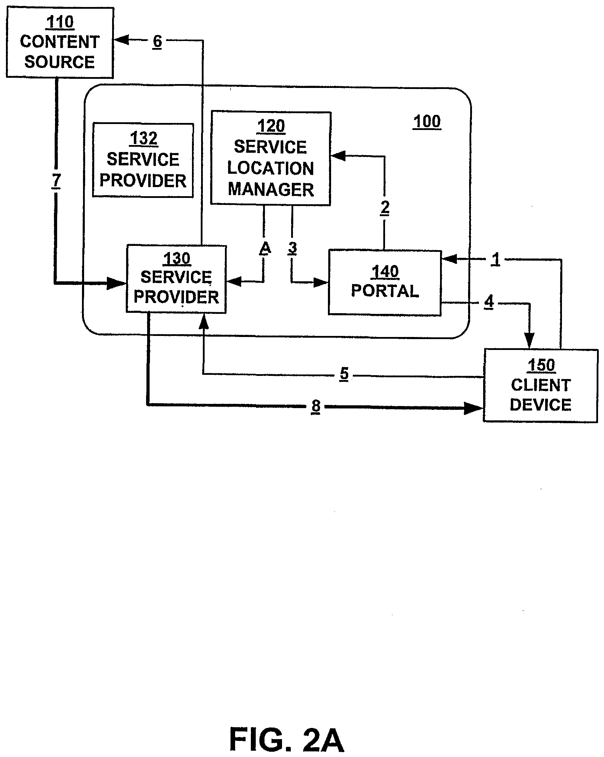

Figure 2A is a block diagram showing information flow in and out of system 100 according to another embodiment of the present invention. A difference between Figure 1 and Figure 2A is the addition of message A from service location manager 120 to the selected service provider (e.g., service provider 130). The message A can be sent from service location manager 120 to service provider 130 at any time after message 2 and before message 5.

Message A can be used for any number of different purposes. For example, in a situation in which the type of service to be performed on the specified item of content is not continuously executing on service provider 130, message A can be used to alert service provider 130 to the approaching need for the service. Consequently, the set up and/or start up of the service can be initiated and perhaps completed before message 5 is received from client device 150, reducing overall latency.

Also, message A can be used to provide to service provider 130 the identity of the item of content and perhaps the identity of the content source 110. With this information, service provider 130 can request content source 110 to provide (e.g., begin streaming) the item of content before message 5 is received, further contributing to a reduction in latency. In addition, the use of message A in this manner can result in improved security, because the content source 110 does not have to be identified to the client device 150, for example.

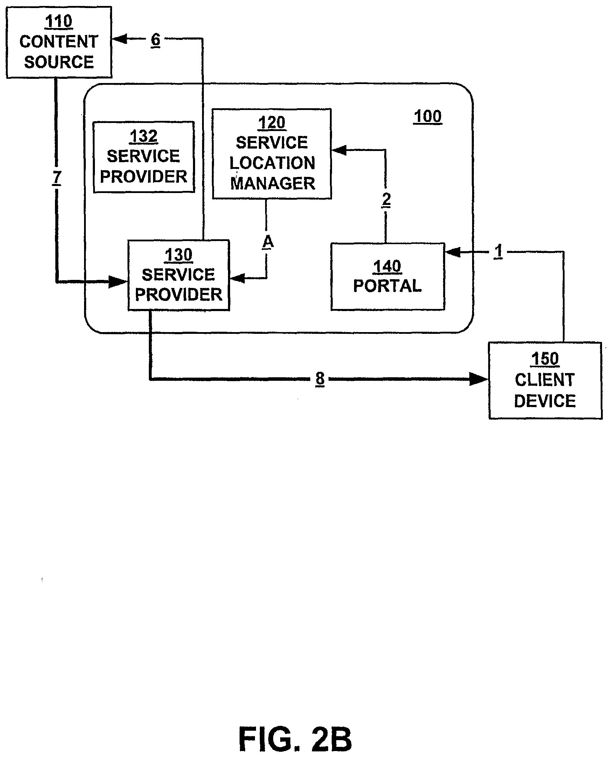

Furthermore, message A can be used in lieu of messages 3, 4 and 5, as illustrated by Figure 2B. For instance, in addition to identifying the item of content and perhaps the content source, message A can also include information enabling service provider 130 to establish communication with client device 150. In other words, instead of having client device 150 initiate the transfer of communication from portal 140 to service provider 130, the transfer of communication can be initiated by service provider 130 in a manner that is still seamless and transparent to a user of client device 150.

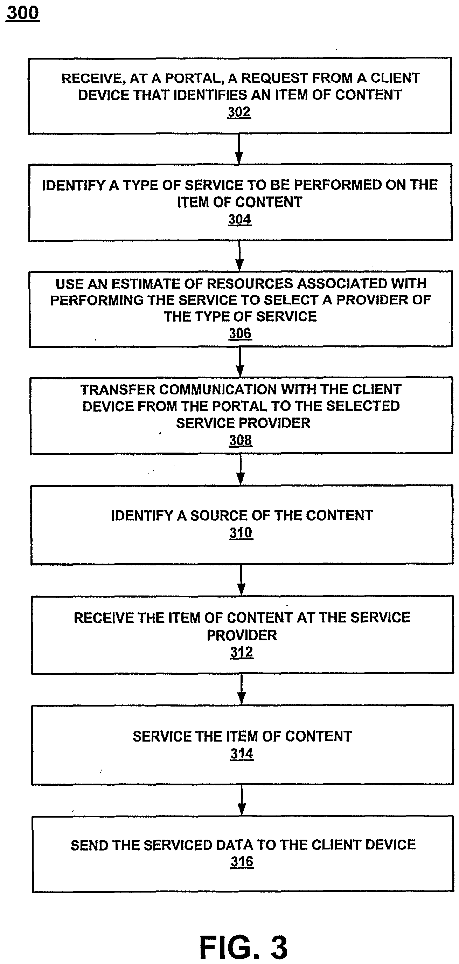

Figure 3 is a flowchart 300 of a method for servicing and delivering service result content according to one embodiment of the present invention. Although specific steps are disclosed in flowchart 300, such steps are exemplary. That is, embodiments of the present invention are well suited to performing various other steps or variations of the steps recited in flowchart 300. It is appreciated that the steps in flowchart 300 may be performed in an order different than presented, and that not all of the steps in flowchart 300 may be performed.

All of, or a portion of, the methods described by flowchart 300 can be implemented using computer-readable and computer-executable instructions which reside, for example, in computer-usable media of a computer system or like device. In the present embodiment, flowchart 300 is implemented by system 100 of Figures 1, 2A and 2B. That is, some of the steps recited in flowchart 300 are performed by portal 140, others by service location manager 120, and yet others by service provider 130 of Figures 1, 2A and 2B.

In step 302 of Figure 3, during a session with a client device, a portal receives a request from the client device, identifying an item of content. The request can include other information. In one embodiment, with reference to Figures 1, 2A and 2B, portal 140 receives message 1 from client device 150.

In step 304 of Figure 3, a type of service to performed on the item of content is identified. The type of service can be identified in the request of step 302, or it can be derived based on information provided in that request. Referring to Figures 1, 2A and 2B, the type of service can be identified by the client device 150, by the portal 140, or by the service location manager 120.

In step 306 of Figure 3, in one embodiment, an estimate of the amount of resources associated with performing the service is made. The estimate can include, for example, the amount of computational and/or network resources associated with performing the service. The estimated resources associated with performing the service can be used to select a service provider.

In one embodiment, a record is maintained of the amount of resources available at each of the service providers (or of the amount of each service provider's resources already allocated to other sessions in progress). A service provider can be selected by selecting the service provider with the most resources available or the least resources in use, for example. Alternatively, the combination of the resource estimate and the record of available/allocated resources can be used to select a service provider. In general, a service provider with enough resources available to perform the service can be selected to perform the service. When more than one service provider has sufficient resources available, the selection of a service provider can be made using a secondary selection scheme such as a round-robin scheme.

Concurrent with or subsequent to the selection of a service provider, the record of service provider resources can be updated, based on the selected provider performing the service. That is, once a service provider has been selected, the record can be updated to reflect a change to the resources associated with the selected service provider, assuming that the service provider is going to perform the service. For example, the amount of resources recorded for the selected service provider can be reduced by the estimate of resources needed to perform the service.

In step 308 of Figure 3, communication with the client device is transferred from the portal to the selected service provider. In other words, the session is transferred from the portal to the selected service provider.

In step 310, a source of the item of content is identified. Referring to Figures 1, 2A and 2B, the source of the item of content can be identified by the client device 150, by the portal 140, by the service location manager 120, or by the selected service provider (e.g., service provider 130). The content source is then contacted to begin delivery of data for the item of content to the selected service provider.

In step 312 of Figure 3, the item of content is received by (e.g., streamed to) the selected service provider.

In step 314, the item of content is serviced according to the specified type of service. Data constituting the item of content can be serviced as the data are received at the service provider, or the data can be cached before servicing. As mentioned above, an item of content may have been serviced, may be in the process of being serviced, may not be serviced, or may not yet be serviced. Servicing of an item of content can include the analysis or processing of an item of content. Service result content may consist of: a modified version of the original serviced item of content (e.g., when background removal is applied to a video stream); an item of content that is derived from the original item of content (e.g., when optical character recognition is used to produce text output); an item of content that is passed through a service provider and is not modified but merely forwarded (e.g., content that does not require transcoding when received by a transcoding service provider); or an item of content that has been previously sent to a service provider and is now cached/stored on the service provider (e.g., content that was previously serviced and is now stored in memory at the service provider). Additionally, service result content may consist of any combination of the above examples.

In one embodiment, the service is executed continuously by the service provider. In another embodiment, the service is not set up or does not start operating until the client device establishes communication with the service provider. In yet another embodiment, the service is set up and/or starts up after the service provider is identified by the service location manager, before the client device establishes communication with the service provider. For example, with reference to Figures 2A and 2B, after service location manager 120 selects service provider 130 as a provider of the specified type of service, a message A is sent to service provider 130, causing service provider 130 to set up and/or start up the service.

In step 316 of Figure 3, the service result content is sent (e.g., streamed) to the client device. The data constituting the service result can be sent as the input data are serviced, or the service result data can be cached before it is sent.

The steps 312,314 and 316 can be performed concurrently. That is, the selected service provider (e.g., service provider 130 of Figures 1, 2A and 2B) can begin servicing the item of content before the entire item of content is received at service provider 130, and service result data can begin to flow out of service provider 130 before the servicing of the entire item of content is completed. Similarly, the servicing of one portion of an item of content can be in progress while the result of servicing another portion of the item of content is being received by the client device.

When the service result content is delivered to client device 150, the session can be terminated.

Also, once the session is terminated, or upon the service provider completing the service, the service provider record maintained by service location manager 120 can be updated. In other words, when a service is completed or a session is terminated, the resources associated with performing the service are now available for use in another session, and the record can be updated to reflect that. For example, the amount of resources recorded for the selected service provider can be increased by the appropriate amount once the selected service provider has performed the service or once the session has been terminated.

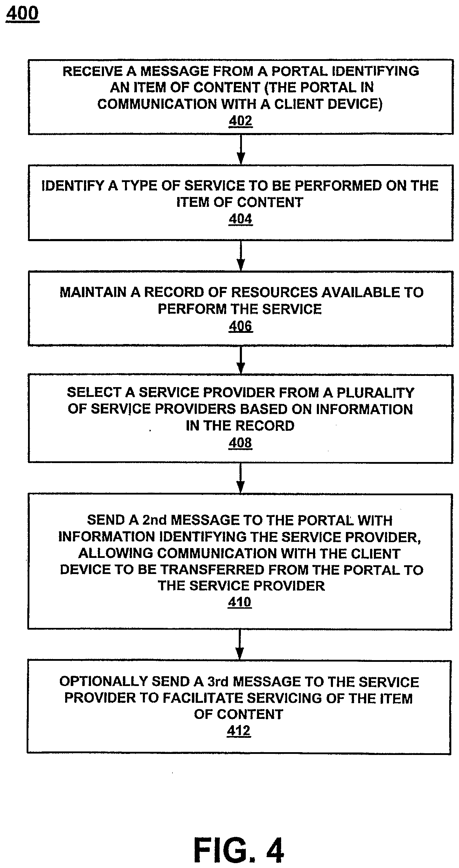

Figure 4 is a flowchart 400 of a method for managing the servicing of content according to one embodiment of the present invention. Although specific steps are disclosed in flowchart 400, such steps are exemplary. That is, embodiments of the present invention are well suited to performing various other steps or variations of the steps recited in flowchart 400. It is appreciated that the steps in flowchart 400 may be performed in an order different than presented, and that not all of the steps in flowchart 400 may be performed.

All of, or a portion of, the methods described by flowchart 400 can be implemented using computer-readable and computer-executable instructions which reside, for example, in computer-usable media of a computer system or like device. In the present embodiment, flowchart 400 is implemented by system 100 of Figures 1, 2A and 2B. Specifically, flowchart 400 is implemented by service location manager 120 of Figures 1, 2A and 2B.

In step 402 of Figure 4, referring also to Figures 1, 2A and 2B, a first message (e.g., message 2) is received from portal 140, identifying an item of content. Portal 140 is in communication with client device 150.

In step 406 of Figure 4, in one embodiment, a record is maintained of the resources available to perform the service, as previously described herein. More specifically, a record can be maintained that identifies each of the service providers known to service location manager 120 (Figures 1, 2A and 2B). The record can also identify the available resources associated with each of those service providers, or the amount of each service provider's resources already allocated to other sessions in progress. In another embodiment, an estimate of the resources needed to perform the service can be made.

In step 408 of Figure 4, in one embodiment, the information in the aforementioned record is used to select a service provider, as previously described herein. In another embodiment, the estimate of the resources needed to perform the service is used to select a service provider. In yet another embodiment, the combination of the record information and the resource estimate is used to select a service provider.

In step 410 of Figure 4, in one embodiment, a second message (e.g., message 3 of Figures 1, 2A and 2B) is sent to the portal. In another embodiment, the second message is sent to the client device, bypassing the portal. The second message includes information that identifies the selected service provider, allowing communication between the client device to be transferred from the portal to the service provider (e.g., from portal 140 to service provider 130 of Figures 1, 2A and 2B).

In step 412 of Figure 4, in one embodiment, a third message (e.g., message A of Figures 2A and 2B) is sent to the selected service provider. The third message can include the identity of the item of content and/or the identity of the content source. The third message can also be used to alert the service provider, allowing the service provider to begin setting up and/or executing the service (if the service is not already executing). In response to the third message, the service provider can also contact the content source, to initiate delivery (e.g., streaming) of the item of content from the content source to the service provider. In lieu of a third message, the activities just described can begin in response to the client device and the service provider establishing communication. Service result content is then sent (e.g., streamed) from the service provider to the client device.

In summary, embodiments of the present invention provide methods and systems that can provide services to a large number of diverse client devices. A variety of services are provided to accommodate the preferences and requirements of the diverse clients. To avoid congestion, the services are provided by a number of service providers managed by a service location manager. A service provider is selected to perform services based on its capacities. Also, a service provider can be selected based on the amount of resources associated with performing the service versus the remaining resources available at the service provider. Items of content requested by the client devices are directed to the selected service provider for servicing.

However, the client devices need only contact a well-published portal site to begin a session and to request items of content. The client devices are automatically and transparently transferred to the selected service provider during the session. From the perspective of the client device, there is a single point of contact. Transparent to the client device is the flow of messages and data through the content delivery system that results in the delivery of service result content to the client device via a service provider selected by the system. Transparent to the end user at the client device is the seamless transfer of the session from the initial point of contact to the selected service provider.

The foregoing descriptions of specific embodiments of the present invention have been presented for purposes of illustration and description. They are not intended to be exhaustive or to limit the invention to the precise forms disclosed, and it is evident many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto

## Claims

1. A method (300,400) of servicing content for delivery to a client device (150), said method comprising:
initiating a session between the client device (150) and a portal (140), wherein initiating the session comprises receiving (302, 402), at the portal (140), a request from the client device (150) that identifies an item of content;
based on the received request, identifying (304,404) a type of service to be performed on an item of content;
using (306,406) an estimate of resources associated with performing said service to select a provider (130) from a plurality of providers (130, 132) capable of performing said service,
the method being **characterised in that** it comprises:
providing (308,410) information for transferring said session from said portal (140) to said selected provider (130), wherein said selected provider (130) performs said service on said item of content upon being transferred said session; and
sending (316) the serviced item of content from the selected provider (130) to the client device (150),
wherein transferring the session comprises:
receiving at the client device (150) or at the selected provider (130), information sufficient for establishing a communication between the client device (150) and the selected provider (130); and
based on the received information, establishing a communication between the client device (150) and the selected provider (130).

2. The method of Claim 1 wherein the service provider (130) is selected by a service location manager (120) coupled to the portal (140), and wherein the method further comprises:
sending a message from the service location manager (120) to the selected service provider (130) for alerting the selected service provider (130) to the approaching need for the service.

3. The method of Claim 1 wherein said resources comprise estimated computational resources associated with performing said service.

4. The method of Claim 1 wherein said resources comprise estimated bandwidth associated with said session.

5. The method of Claim 1 wherein said selecting comprises:
(406) maintaining a record comprising providers to which sessions have been transferred; and (408) selecting said provider according to said record.

6. The method of Claim 1 further comprising:
estimating an amount of time said session is expected to remain with said provider.

7. The method of Claim 1 further comprising:
receiving an indication from said provider that said service is completed.

8. The method of Claim 1 wherein said transferring comprises:
(308,410) sending information for locating said provider to said client device, wherein said client device and said provider transparently establish communication.

9. The method of Claim 1 further comprising:
(310) identifying a source of said item of content, wherein data for said item of content are streamed from said source to said provider and wherein service result data are streamed from said provider to said client device.

10. A computer-usable medium having computer-readable program code embodied therein for causing a computer system to perform a method (300,400) of one of claims 1 to 9.

11. A system comprising:
a portal (140) for receiving a request for an item of content from a client device (150) during a session between the client device (150) and the portal (140); and
a service manager (120) for receiving said request from said portal (140),
wherein said service manager (120) is also for selecting a provider (130) from a plurality of providers (130, 132), each provider (130, 132) capable of performing a service on said item of content, wherein said service manager (120) is adapted to maintain a
record comprising resources associated with said providers (130, 132) and wherein said service manager (120) is adapted to use an estimate of resources associated with performing said service to select said provider (130) according to information in said record,
said system being **characterised in that** it is adapted to:
provide (308,410) information for transferring said session from said portal (140) to said selected provider (130), wherein said selected provider (130) is adapted to perform said service on said item of content upon being transferred said session;
send to the client device (150) or to the selected provider (130) information sufficient for establishing a communication between the client device (150) and the selected provider (130); and
send (316) the serviced item of content from the selected provider (130) to the client device (150).

12. The system of Claim 11 wherein the service location manager (120) is adapted to send a message to the selected service provider (130) for alerting the selected service provider (130) to the approaching need for the service.

## Patentansprüche

1. Verfahren (300, 400) zum Verwalten von Inhalt zum Liefern an ein Client-Gerät (150), wobei das Verfahren Folgendes umfasst:
Einleiten einer Sitzung zwischen dem Client-Gerät (150) und einem Portal (140), wobei das Einleiten der Sitzung ein Empfangen (302, 402) einer Anforderung von dem Client-Gerät (150), das ein Inhaltselement identifiziert, am Portal (140) umfasst;
Identifizieren (304, 404) einer Art von an einem Inhaltselement durchzuführendem Dienst auf der Grundlage der empfangenen Anforderung;
Verwenden (306,406) einer Schätzung von Ressourcen, die mit dem Durchführen des Dienstes zum Auswählen eines Anbieters (130) aus mehreren Anbietern (130, 132), die fähig sind, diesen Dienst durchzuführen, verknüpft sind,
wobei das Verfahren **dadurch gekennzeichnet ist, dass** es Folgendes umfasst:
Bereitstellen (308, 410) von Informationen zum Übertragen der Sitzung von dem Portal (140) an den ausgewählten Anbieter (130), wobei der ausgewählte Anbieter (130) den Dienst an dem Inhaltselement durchführt, nachdem ihm die Sitzung übertragen worden ist; und
Senden (316) des verwalteten Inhaltselements von dem ausgewählten Anbieter (130) an das Client-Gerät (150),
wobei das Übertragen der Sitzung Folgendes umfasst:
Empfangen, am Client-Gerät (150) oder am ausgewählten Anbieter (130), von Informationen, die zum Aufbauen einer Verbindung zwischen dem Client-Gerät (150) und dem ausgewählten Anbieter (130) ausreichen; und
Aufbauen einer Verbindung zwischen dem Client-Gerät (150) und dem ausgewählten Anbieter (130) auf der Grundlage der empfangenen Informationen.

2. Verfahren nach Anspruch 1, wobei der Dienstanbieter (130) ausgewählt wird durch einen an das Portal (140) gekoppelten Dienststandortmanager (120) und wobei das Verfahren ferner Folgendes umfasst:
Senden einer Meldung von dem Dienststandortmanager (120) an den ausgewählten Dienstanbieter (130), um den ausgewählten Dienstanbieter (130) über das bevorstehende Erfordernis des Dienstes zu benachrichtigen.

3. Verfahren nach Anspruch 1, wobei die Ressourcen geschätzte Rechenressourcen, die mit dem Durchführen des Dienstes verknüpft sind, umfassen.

4. Verfahren nach Anspruch 1, wobei die Ressourcen eine geschätzte Bandbreite, die mit der Sitzung verknüpft ist, umfassen.

5. Verfahren nach Anspruch 1, wobei das Auswählen Folgendes umfasst:
(406) Pflegen eines Datensatzes, der Anbieter umfasst, an die Sitzungen übertragen worden sind; und (408) Auswählen des Anbieters gemäß dem Datensatz.

6. Verfahren nach Anspruch 1, ferner Folgendes umfassend:
Abschätzen eines Zeitraums, den die Sitzung voraussichtlich bei dem Anbieter bleibt.

7. Verfahren nach Anspruch 1, ferner Folgendes umfassend:
Empfangen eines Hinweises von dem Anbieter, dass der Dienst abgeschlossen ist.

8. Verfahren nach Anspruch 1, wobei das Übertragen Folgendes umfasst:
(308, 410) Senden von Informationen zum Lokalisieren des Anbieters an das Client-Gerät, wobei das Client-Gerät und der Anbieter transparent eine Verbindung aufbauen.

9. Verfahren nach Anspruch 1, ferner Folgendes umfassend:
(310) Identifizieren einer Quelle des Inhaltselements, wobei Daten für das Inhaltselement von der Quelle an den Anbieter gestreamt werden und wobei Dienstergebnisdaten von dem Anbieter an das Client-Gerät gestreamt werden.

10. Computerverwendbares Medium mit darin eingebettetem computerlesbarem Programmcode zum Bewirken, dass ein Computersystem ein Verfahren (300, 400) nach einem der Ansprüche 1 bis 9 durchführt.

11. System, Folgendes umfassend:
ein Portal (140) zum Empfangen einer Anforderung für ein Inhaltselement von einem Client-Gerät (150) während einer Sitzung zwischen dem Client-Gerät (150) und dem Portal (140); und
einen Dienstmanager (120) zum Empfangen der Anforderung von dem Portal (140),
wobei der Dienstmanager (120) ferner zum Auswählen eines Anbieters (130) aus mehreren Anbietern (130, 132) vorgesehen ist, wobei jeder Anbieter (130, 132) fähig ist, einen Dienst an dem Inhaltselement durchzuführen, wobei der Dienstmanager (120) angepasst ist, einen Datensatz, der Ressourcen umfasst, die mit den Anbietern (130, 132) verknüpft sind, zu pflegen und wobei der Dienstmanager (120) angepasst ist, eine Schätzung von Ressourcen, die mit dem Durchführen des Dienstes zum Auswählen des Anbieters (130) gemäß Informationen in dem Datensatz verknüpft sind, zu verwenden,
wobei das System **dadurch gekennzeichnet ist, dass** es angepasst ist zum:
Bereitstellen (308, 410) von Informationen zum Übertragen der Sitzung von dem Portal (140) an den ausgewählten Anbieter (130), wobei der ausgewählte Anbieter (130) angepasst ist, den Dienst an dem Inhaltselement durchzuführen, nachdem ihm die Sitzung übertragen worden ist;
Senden, an das Client-Gerät (150) oder an den ausgewählten Anbieter (130), von Informationen, die zum Aufbauen einer Verbindung zwischen dem Client-Gerät (150) und dem ausgewählten Anbieter (130) ausreichen; und
Senden (316) des verwalteten Inhaltselements von dem ausgewählten Anbieter (130) an das Client-Gerät (150).

12. System nach Anspruch 11, wobei der Dienststandortmanager (120) angepasst ist, eine Meldung an den ausgewählten Dienstanbieter (130) zu senden, um den ausgewählten Dienstanbieter (130) über das bevorstehende Erfordernis des Dienstes zu benachrichtigen.

## Revendications

1. Procédé (300, 400) d'entretien de contenu pour une livraison à un dispositif client (150), ledit procédé comprenant :
l'initiation d'une session entre le dispositif client (150) et un portail (140), dans lequel l'initiation de la session comprend la réception (302, 402), au niveau du portail (140), d'une demande du dispositif client (150) qui identifie un article de contenu ;
sur la base de la demande reçue, l'identification (304, 404) d'un type de service à réaliser sur un article de contenu ;
l'utilisation (306, 406) d'une estimation de ressources associées à la réalisation dudit service pour sélectionner un fournisseur (130) à partir d'une pluralité de fournisseurs (130, 132) capables de réaliser ledit service,
le procédé étant **caractérisé en ce qu'**il comprend :
la fourniture (308, 410) d'informations pour transférer ladite session dudit portail (140) audit fournisseur sélectionné (130), dans lequel ledit fournisseur sélectionné (130) réalise ledit service sur ledit article de contenu lorsqu'il est transféré de ladite session ; et
l'envoi (316) de l'article de contenu entretenu du fournisseur sélectionné (130) au dispositif client (150),
dans lequel le transfert de la session comprend :
la réception au niveau du dispositif client (150) ou au niveau du fournisseur sélectionné (130), d'informations suffisantes pour établir une communication entre le dispositif client (150) et le fournisseur sélectionné (130) ; et
sur la base des informations reçues, l'établissement d'une communication entre le dispositif client (150) et le fournisseur sélectionné (130).

2. Procédé selon la revendication 1 dans lequel le fournisseur de service (130) est sélectionné par un gestionnaire de localisation de service (120) couplé au portail (140), et dans lequel le procédé comprend en outre :
l'envoi d'un message du gestionnaire de localisation de service (120) au fournisseur de service sélectionné (130) pour alerter le fournisseur de service sélectionné (130) à l'approche de la nécessité du service.

3. Procédé selon la revendication 1 dans lequel lesdites ressources comprennent des ressources de calcul estimées associées à la réalisation dudit service.

4. Procédé selon la revendication 1 dans lequel lesdites ressources comprennent une largeur de bande estimée associée à ladite session.

5. Procédé selon la revendication 1 dans lequel ladite sélection comprend :
(406) le maintien d'un enregistrement comprenant des fournisseurs auxquels des sessions ont été transférées ; et (408) la sélection dudit fournisseur selon ledit enregistrement.

6. Procédé selon la revendication 1 comprenant en outre :
l'estimation d'une quantité de temps pendant laquelle ladite session devrait rester avec ledit fournisseur.

7. Procédé selon la revendication 1 comprenant en outre :
la réception d'une indication provenant dudit fournisseur que ledit service est achevé.

8. Procédé selon la revendication 1 dans lequel ledit transfert comprend :
(308, 410) l'envoi d'informations pour localiser ledit fournisseur audit dispositif client, dans lequel ledit dispositif client et ledit fournisseur établissent de manière transparente une communication.

9. Procédé selon la revendication 1 comprenant en outre :
(310) l'identification d'une source dudit article de contenu, dans lequel des données pour ledit article de contenu sont transmises en continu de ladite source audit fournisseur et dans lequel des données de résultat de service sont transmises en continu dudit fournisseur audit dispositif client.

10. Support utilisable par ordinateur ayant un code de programme lisible par ordinateur incorporé dans ce dernier pour amener un système informatique à réaliser un procédé (300, 400) selon l'une quelconque des revendications 1 à 9.

11. Système comprenant :
un portail (140) pour recevoir une demande d'un article de contenu à partir d'un dispositif client (150) pendant une session entre le dispositif client (150) et le portail (140) ; et
un gestionnaire de service (120) pour recevoir ladite demande à partir dudit portail (140),
dans lequel ledit gestionnaire de service (120) est également destiné à sélectionner un fournisseur (130) à partir d'une pluralité de fournisseurs (130, 132), chaque fournisseur (130, 132) capable de réaliser un service sur ledit article de contenu, dans lequel ledit gestionnaire de service (120) est conçu pour conserver un enregistrement comprenant des ressources associées auxdits fournisseurs (130, 132) et dans lequel ledit gestionnaire de service (120) est conçu pour utiliser une estimation de ressources associées à la réalisation dudit service pour sélectionner ledit fournisseur (130) selon des informations dans ledit enregistrement,
ledit système étant **caractérisé en ce qu'**il est conçu pour :
fournir (308, 410) des informations pour transférer ladite session dudit portail (140) audit fournisseur sélectionné (130), dans lequel ledit fournisseur sélectionné (130) est conçu pour réaliser ledit service sur ledit article de contenu lorsqu'il est transféré de ladite session ;
envoyer au dispositif client (150) ou au fournisseur sélectionné (130) des informations suffisantes pour établir une communication entre le dispositif client (150) et le fournisseur sélectionné (130) ; et
envoyer (316) l'article de contenu entretenu du fournisseur sélectionné (130) au dispositif client (150).

12. Système selon la revendication 11 dans lequel le gestionnaire de localisation de service (120) est conçu pour envoyer un message au fournisseur de service sélectionné (130) pour alerter le fournisseur de service sélectionné (130) à l'approche de la nécessité du service.
